# EUROPÄISCHE PATENTSCHRIFT

(11) **EP 2 513 249 B1**
(45) Veröffentlichungstag und Bekanntmachung des Hinweises auf die Patenterteilung: **02.10.2013**
(21) Anmeldenummer: 10790773.5
(22) Anmeldetag: 13.12.2010
(51) Int. Cl.: C09K 19/32, C09K 19/20, C09K 19/04

(54) **FLÜSSIGKRISTALLINE MISCHUNGEN**
LIQUID CRYSTAL MIXTURES
MÉLANGES CRISTAUX LIQUIDES

(30) Priorität: 17.12.2009 EP 09179739
(43) Veröffentlichungstag der Anmeldung: 24.10.2012
(73) Patentinhaber: BASF SE, 67056 Ludwigshafen (DE)
(72) Erfinder: BRILL, Jochen, 67346 Speyer (DE); SCHALKOWSKY, Ulrich, 67346 Speyer (DE); MUSIOL, Thomas, 67133 Maxdorf (DE)
(86) Internationale Anmeldenummer: PCT/EP2010/069475
(87) Internationale Veröffentlichungsnummer: WO 2011/082969

(56) Entgegenhaltungen:
- EP-A1- 2 067 796
- EP-A1- 2 110 390
- EP-A1- 2 130 843
- WO-A1-2006/120220
- WO-A1-2009/153287
- WO-A2-97/00600
- DE-A1- 19 905 394
- US-A1- 2003 219 548

## Beschreibung

Die vorliegende Erfindung beschreibt flüssigkristalline Mischungen, sowie Oligomere oder Polymere, welche durch Oligomerisation oder Polymerisation der erfindungsgemäßen, flüssigkristallinen Mischungen erhältlich sind, ein Verfahren zum Bedrucken oder Beschichten von Substraten durch Aufbringen und anschließende Polymerisation der erfindungsgemäßen flüssigkristallinen Mischungen und die Verwendung der erfindungsgemäßen, flüssigkristallinen Mischungen oder der erfindungsgemäßen Oligomere oder Polymere zur Herstellung optischer oder elektrooptischer Bauteile.

Desweiteren betrifft die vorliegende Erfindung die Verwendung der erfindungsgemäßen, flüssigkristallinen Mischungen, welche mindestens einen chiralen Dotierstoff enthalten, zur Herstellung von Wärmeisolationsschichten, sowie solche Wärmeisolationsschichten.

Zahlreiche Verbindungen gehen beim Erwärmen vom kristallinen Zustand mit definierter Nah- und Femordnung der Moleküle nicht direkt in den flüssigen, ungeordneten Zustand über, sondern durchlaufen dabei eine flüssigkristalline Phase, in welcher die Moleküle zwar beweglich sind, die Molekülachsen jedoch eine geordnete Struktur ausbilden. Gestreckte Moleküle bilden hierbei oft nematische flüssigkristalline Phasen, die durch eine Orientierungsfernordnung durch Parallellagerung der Moleküllängsachsen gekennzeichnet sind. Enthält eine derartige nematische Phase chirale Verbindungen oder chirale Molekülteile, kann sich eine chiral-nematische bzw. cholesterische Phase ausbilden, welche durch eine helixartige Überstruktur gekennzeichnet ist. Je kleiner bzw. größer in einem gegebenen System der Anteil an chiraler Verbindung bzw. chiralem Molekülteil ist, desto größer bzw. kleiner ist die Ganghöhe ("pitch") der helixartigen Überstruktur. Damit elektromagnetische Strahlung vergleichsweise großer Wellenlänge, beispielsweise im Bereich der NIR-Strahlung, in ausreichendem Maß reflektiert werden kann, ist die Ausbildung möglichst großer Schichtdicken der chiral-nematischen Phase erforderlich, was jedoch üblicherweise mit einer Zunahme der Fehlorientierung der helixartigen Überstruktur einhergeht.

Desweiteren ist für die Applikation der flüssigkristallinen Materialien wichtig, dass die flüssigkristalline Phase im benötigten Temperaturbereich und mit ausreichender Phasenbreite vorliegt.

Die Schrift EP 2 110 390 A1 beschreibt polymerisierbare Mischungen aus Diacrylaten und Monoacrylaten, wobei letztere eine terminale Nitrilgruppe aufweisen. Solche Mischungen finden gemäß vorgenannter Schrift u.a. verwendung in der Herstellung von Filmen mit homogenen und vorteilhaften optischen Eigenschaften.

Die veröffentlichte Patentanmeldung EP 0 67 796 A1 betrifft Di(meth)acrylate, welche 1,6-Naphthyl-Gruppen enthalten, sowie polymerisierbare Mischungen, welche solche Di(meth)acrylate enthalten. U.a. werden diese Mischungen zur Herstellung von optischen Filmen beansprucht.

Die Schrift US 200310219548 A1 beschreibt direaktive, polymerisierbare Verbindungen, welche, beispielsweise in Mischung mit chiralen Dotanten, zur Herstellung von farb- und polarisationsselektiv reflektierenden Filmen verwendet werden können.

Die veröffentlichte Patentanmeldung DE 199 05 394 A1 befasst sich mit Mischungen, welche direaktive und mono- oder direaktive Verbindungen als zwingende Komponenten und weitere optionale Komponenten enthalten.

In der Schrift EP 2 130 843 A1 werden polymerisierbare Di(meth)acrylate und Mischungen, welche entsprechende Di(meth)acrylate enthalten, offenbart, sowie Polymere, welche aus solchen Mischungen hergestellt werden und optische Filme, welche aus einem solchen Polymer gebildet werden.

Mischungen gemäß vorliegender Erfindung werden jedoch durch sämtliche zuvor genannten Schriften weder beschrieben, noch nahegelegt.

Aufgabe der vorliegenden Erfindung war es daher, flüssigkristalline Materialien mit vergleichsweise hohen doppelbrechenden Eigenschaften bereitzustellen, welche unter den Bedingungen der Applikation in der flüssigkristallinen Phase vorliegen, eine ausreichend große Phasenbreite aufweisen und darüberhinaus die Herstellung von defektarmen Schichten auch bei größeren Schichtdicken gestatten.

Demgemäß wurden flüssigkristalline Mischungen gefunden, welche enthalten
als Komponente A:
eine oder mehrere Verbindungen der allgemeinen Formel I 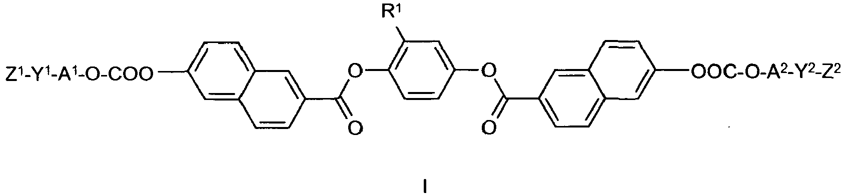
in welcher die Variablen folgende Bedeutung haben:
   - Z¹, Z²: unabhängig voneinander 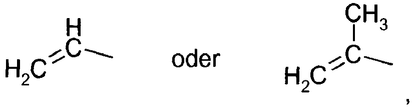
   - A¹, A²: unabhängig voneinander Spacer mit 4 bis 8 Kohlenstoffatomen,
   - Y¹, Y²: unabhängig voneinander eine chemische Einfachbindung, Sauerstoff, -CO-, -O-CO- oder -CO-O-,
   - R¹: Wasserstoff, C₁-C₆-Alkyl oder CO-O-C₁-C₆-Alkyl,
als Komponente B:
eine oder mehrere Verbindungen der allgemeinen Formel II 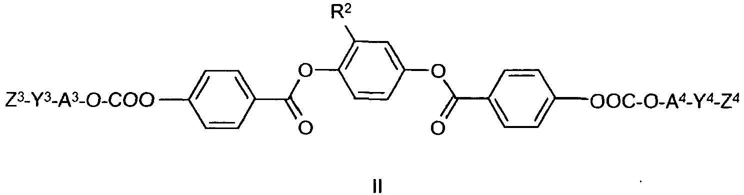 in welcher die Variablen folgende Bedeutung haben:
   - Z³, Z⁴: unabhängig voneinander 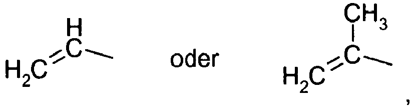
   - A³, A⁴: unabhängig voneinander Spacer mit 4 bis 8 Kohlenstoffatomen,
   - Y³, Y⁴: unabhängig voneinander eine chemische Einfachbindung, Sauerstoff, - CO-, -O-CO- oder -CO-O-,
   - R²: Wasserstoff, C₁-C₆-Alkyl oder CO-O-C₁-C₆-Alkyl,
wobei der Anteil der Komponente A 22,5 mol-% bis 32,5 mol-% und der Anteil der Komponente B 67,5 mol-% bis 77,5 mol-% beträgt, bezogen auf die Gesamtmolzahl der Komponenten A und B, und die Anteile der Komponenten A und B sich zu 100 mol-% ergänzen, und
als Komponente C:
eine oder mehrere Substanzen ausgewählt aus der Gruppe bestehend aus:
   C.1 Photoinitiatoren;
   C.2 Reaktivverdünnern, welche photopolymerisierbare Gruppen enthalten;
   C.3 Lösungsmitteln;
   C.4 Entschäumern und Entlüftern;
   C.5 Gleit- und Verlaufsmitteln;
   C.6 thermisch härtenden und/oder strahlenhärtenden Hilfsmitteln;
   C.7 Substratnetzhilfsmitteln;
   C.8 Netz- und Dispergierhilfsmitteln;
   C.9 Hydrophobierungsmitteln;
   C.10 Haftvermittlern;
   C.11 Hilfsmitteln zur Verbesserung der Kratzfestigkeit; und
   C.12 chiralen Dotierstoffen; und
gegebenenfalls als Komponente D:
   eine oder mehrere Substanzen ausgewählt aus der Gruppe bestehend aus:
      D.1 Farbstoffen; und
      D.2 Pigmenten.

Bevorzugt sind in Formel I die Reste Z¹ und Z², sowie in Formel II die Reste Z³ und Z⁴ gleich. Insbesondere handelt es sich bei allen Resten Z¹ bis Z⁴ um Vinylgruppen.

Bevorzugt sind flüssigkristalline Mischungen, in welchen Z¹-Y¹ und Y²-Z² in Formel I der Komponente A und Z³-Y³ und Y⁴-Z⁴ in Formel II der Komponente B reaktive Gruppierungen 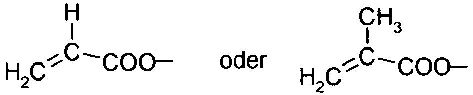 bedeuten. Insbesondere sind die Gruppierungen Z¹-Y¹ und Y²-Z² und Z³-Y³ und Y⁴-Z⁴ jeweils untereinander gleich. Besonders bevorzugt handelt es sich bei allen Gruppierungen Z¹-Y¹, Y²-Z², Z³-Y³ und Y⁴-Z⁴ um Acryloyloxygruppen.

Die Spacer A¹ und A² enthalten 4 bis 8 Kohlenstoffatome und bestehen aus vorwiegend linearen aliphatischen Gruppen. Sie können in der Kette durch nicht benachbarte Sauerstoffatome unterbrochen sein. Als mögliche Substituenten für die Spacerkette kommen beispielsweise Fluor, Chlor, Brom, Cyan, Methyl und Ethyl in Betracht.

Vorzugsweise sind die Spacer A¹ und A², sowie A³ und A⁴ jeweils untereinander gleich.

Repräsentative unsubstituierte Spacer A¹, A², A³ und A⁴ sind beispielsweise:
-(CH₂)ₚ- oder -(CH₂CH₂O)ₘCH₂CH₂-,
repräsentative substituierte Spacer A¹, A², A³ und A⁴ sind beispielsweise: 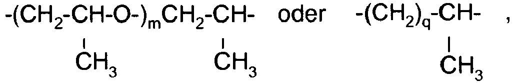 wobei p für ganze Zahlen 4 bis 8, m für ganze Zahlen 1 bis 3, und q für ganze Zahlen 3 bis 7 steht.

Unter C₁-C₆-Alkyl in der Definition der Reste R¹ und R² oder in den Gruppierungen CO-O-C₁-C₆-Alkyl in der Definition der Reste R¹ und R² in den Formeln I und II sind zu verstehen Methyl, Ethyl, Propyl, Isopropyl, Butyl, Isobutyl, sec-Butyl, tert-Butyl, Pentyl, Isopentyl, Neopentyl, tert-Pentyl, Hexyl und 2-Methyl-pentyl. Vorzugsweise sind die C₃-C₆-Alkylreste unverzweigt. Bevorzugte Reste sind Methyl, Ethyl, Propyl, Butyl, Pentyl und Hexyl.

Die Herstellung der Verbindungen der allgemeinen Formel I der Komponente A ist beispielsweise in der Publikation WO 97/00600 A2, die Herstellung der Verbindungen der allgemeinen Formel II der Komponente B ist beispielsweise in der Publikation WO 2006/120220 A1 beschrieben.

Wenn die erfindungsgemäßen flüssigkristallinen Mischungen photochemisch polymerisiert werden sollen, werden ihnen üblicherweise handelsübliche Photoinitiatoren als Komponente C.1 zugesetzt. Für eine Härtung durch Elektronenstrahlen sind solche Photoinitiatoren in der Regel jedoch nicht notwendig.

Geeignete Photoinitiatoren C.1 sind beispielsweise Isobutylbenzoinether, 2,4,6-Trimethylbenzoyldiphenylphosphinoxid, 1-Hydroxycyclohexylphenylketon, 2-Benzyl-2-dimethylamino-1-(4-morpholinophenyl)-furan-1-on, Mischungen von Benzophenon und 1-Hydroxycyclohexyl-phenylketon, 2,2-Dimethoxy-2-phenylacetophenon, perfluorierte Diphenyltitanocene, 2-Methyl-1-(4-[methylthio]phenyl)-2-(4-morpholinyl)-1-propanon, 2-Hydroxy-2-methyl-1-phenylpropan-1-on, 4-(2-Hydroxyethoxy)phenyl-2-hydroxy-2-propylketon, 2,2-Diethoxyacetophenon, 4-Benzoyl-4'-methyldiphenyl-sulfid, Ethyl-4-(dimethylamino)benzoat, Mischungen von 2-Isopropylthioxanthon und 4-Isopropylthioxanthon, 2-(Dimethylamino)ethylbenzoat, d,I-Campherchinon, Ethyl-d,I-campherchinon, Mischungen von Benzophenon und 4-Methylbenzophenon, Benzophenon, 4,4'-Bisdimethylamin-benzophenon, (η⁵-Cyclopentadienyl) (η⁶-isopropylphenyl)-eisen(II)-hexafluorophosphat, Triphenylsulfonium-hexafluorophosphat oder Mischungen von Triphenylsulfoniumsalzen, sowie Butandioldiacrylat, Dipropylenglykoldiacrylat, Hexandioldiacrylat, 4-(1,1-Dimethylethyl)cyclohexylacrylat, Trimethylolpropantriacrylat und Tripropylenglykoldiacrylat.

Kommerziell sind diese Photoinitiatoren C.1 unter den Markennamen Lucirin^{®}, Irgacure^{®} und Darocure^{®} erhältlich. Bevorzugt werden die Initiatoren Lucirin^{®} TPO, Lucirin^{®} TPO-L, Irgacure^{®} Oxe 01, Irgacure^{®} Oxe 02, Irgacure^{®} 1300, Irgacure^{®} 184, Irgacure^{®} 369, Irgacure^{®} 907 oder Darocure^{®} 1173 und besonders bevorzugt die Initiatoren Lucirin^{®} TPO, Lucirin^{®} TPO-L, Irgacure^{®} Oxe 01, Irgacure^{®} Oxe 02, Irgacure^{®} 1300 oder Irgacure^{®} 907 verwendet.

Die Photoinitiatoren werden üblicherweise in einem Anteil von etwa 0,1 bis 5,0 Gew.-% bezogen auf das Gesamtgewicht der erfindungsgemäßen, flüssigkristallinen Mischungen eingesetzt. Speziell, wenn man das Härten unter Inertgasatmosphäre durchführt, ist es möglich, deutlich geringere Mengen an Photoinitiatoren zu verwenden. In diesem Fall werden die Photoinitiatoren in einem Anteil von etwa 0,1 bis 1,0 Gew.-%, vorzugsweise 0,2 bis 0,6 Gew.-%, bezogen auf das Gesamtgewicht der erfindungsgemäßen, flüssigkristallinen Mischungen, eingesetzt.

Zu den Reaktiwerdünnern C.2, welche üblicherweise zur Photopolymerisation befähigt sind, zählen beispielsweise mono-, bi- oder polyfunktionelle Verbindungen mit mindestens einer olefinischen Doppelbindung. Beispiele hierfür sind Vinylester von Carbonsäuren, wie z. B. der Laurin-, Myristin-, Palmitin- oder Stearinsäure, oder von Dicarbonsäuren, wie z. B. der Bernsteinsäure und Adipinsäure, Allyl- oder Vinylether oder Methacryl- oder Acrylsäureester monofunktioneller Alkohole, wie z. B. des Lauryl-, Myristyl-, Palmityl- oder Stearylalkohols, oder Diallyl- oder Divinylether bifunktioneller Alkohole, wie z. B. des Ethylenglycols und des Butan-1,4-diols.

Weiter kommen z. B. in Frage Methacryl- oder Acrylsäureester polyfunktioneller Alkohole, insbesondere solcher, welche neben den Hydroxylgruppen keine weiteren funktionellen Gruppen oder allenfalls Ethergruppen enthalten. Beispiele solcher Alkohole sind z. B. bifunktionelle Alkohole, wie Ethylenglykol, Propylenglykol, und deren höher kondensierte Vertreter, wie z. B. Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Als Reaktiwerdünner C.2 kommen weiter in Frage Polyester(meth)acrylate, wobei es sich hierbei um die (Meth)acrylsäureester von Polyesterolen handelt.

Als Polyesterole kommen beispielsweise solche in Betracht, die durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Als Dicarbonsäuren können Bernsteinsäure, Glutarsäure, Adipinsäure, Sebacinsäure, o-Phthalsäure und deren Isomere und Hydrierungsprodukte, sowie veresterbare oder umesterbare Derivate der genannten Säuren, wie z. B. Anhydride oder Dialkylester eingesetzt werden. Als Polyole kommen die oben genannten Alkohole, vorzugsweise Ethylenglykol, 1,2- und 1,3-Propylenglykol, 1,4-Butandiol, 1,6-Hexandiol, Neopentylglykol, Cyclohexandimethanol sowie Polyglykole vom Typ des Ethylenglykols und Propylenglykols in Betracht.

Weiterhin kommen als Reaktivverdünner C.2 in Frage 1,4-Divinylbenzol, Triallylcyanurat, Acrylsäureester des Tricyclodecenylalkohols der nachstehenden Formel 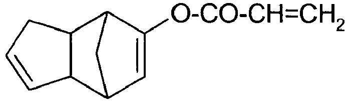 auch bekannt unter dem Namen Dihydrodicyclopentadienylacrylat, sowie die Allylester der Acrylsäure, der Methacrylsäure und der Cyanacrylsäure.

Setzt man Reaktivverdünner ein, so müssen deren Menge und Eigenschaften so an die jeweiligen Verhältnisse angepasst werden, dass einerseits ein zufriedenstellender gewünschter Effekt, z. B. die erwünschte reflektierte Wellenlänge der erfindungsgemäßen flüssigkristallinen Mischungen, eingestellt, andererseits jedoch das Phasenverhalten der flüssigkristallinen Mischungen nicht zu stark beeinträchtigt wird. Für die Herstellung niedrigvernetzender (hochvernetzender) flüssigkristalliner Mischungen kann man beispielsweise entsprechende Reaktivverdünner verwenden, welche eine relativ geringe (hohe) Anzahl an reaktiven Einheiten je Molekül besitzen.

Die Reaktivverdünner werden üblicherweise in einem Anteil von etwa 0,5 bis 20,0 Gew.-% bezogen auf das Gesamtgewicht der erfindungsgemäßen flüssigkristallinen Mischungen eingesetzt.

Unter Lösungsmittel C.3 fallen beispielsweise C₁-C₄-Alkohole, wie z. B. Methanol, Ethanol, n-Propanol, Isopropanol, Butanol, Isobutanol, sec-Butanol, tert-Butanol sowie die C₅-C₁₂-Alkohole n-Pentanol, n-Hexanol, n-Heptanol, n-Octanol, n-Nonanol, n-Decanol, n-Undecanol und n-Dodecanol und deren Isomere, Glykole, wie z. B. 1,2-Ethylenglykol, 1,2- oder 1,3-Propylenglykol, 1,2-, 2,3- oder 1,4-Butylenglykol, Di- oder Triethylenglykol oder Di- oder Tripropylenglykol, Ether, z. B. offenkettige Ether, wie Methyl-tert-butylether, 1,2-Ethylenglykolmono- oder -dimethylether, 1,2-Ethylenglykolmono- oder -diethylether, 3-Methoxypropanol oder 3-Isopropoxypropanol, oder cyclische Ether, wie Tetrahydrofuran oder Dioxan, offenkettige Ketone, wie z. B. Aceton, Methylethylketon, Methylisobutylketon oder Diacetonalkohol (4-Hydroxy-4-methyl-2-pentanon), cyclische Ketone, wie Cyclopentanon oder Cyclohexanon, C₁-C₅-Alkylester, wie z. B. Essigsäuremethylester, Essigsäureethylester, Essigsäurepropylester, Essigsäurebutylester oder Essigsäureamylester, C₁-C₄-Alkoxy-C₁-C₄-alkylester, wie 1-Methoxyprop-2-ylacetat, Carbonsäureamide, wie Dimethylformamid und Dimethylacetamid, N-Heterocyclen, wie N-Methylpyrrolidon, aliphatische oder aromatische Kohlenwasserstoffe wie z. B. Pentan, Hexan, Heptan, Octan, Isooctan, Petrolether, Toluol, Xylol, Ethylbenzol, Tetralin, Dekalin, Dimethylnaphthalin, Testbenzin, Shellso® oder Solvesso®. Selbstverständlich kommen auch Mischungen dieser Lösungsmittel für die Verwendung in den erfindungsgemäßen flüssigkristallinen Mischungen in Betracht.

Besonders geeignete Verdünnungsmittel in den erfindungsgemäßen, flüssigkristallinen Mischungen sind lineare oder verzweigte Ester, besonders Essigsäureester, C₁-C₄-Alkoxy-C₁-C₄-alkylester, wie 1-Methoxyprop-2-ylacetat, cyclische Ester, Carbonsäureamide, wie Dimethylformamid und Dimethylacetamid, offenkettige und cyclische Ether, Alkohole, Lactone, offenkettige und cyclische Ketone, wie Cyclopentanon und Cyclohexanon, sowie aliphatische und aromatische Kohlenwasserstoffe, wie Toluol, Xylol und Cyclohexan.

Die Lösungsmittel werden üblicherweise in einem Anteil von etwa 50 bis 95 Gew.-%, vorzugsweise von etwa 65 bis 80 Gew.-%, bezogen auf das Gesamtgewicht der erfindungsgemäßen, flüssigkristallinen Mischungen, eingesetzt. Je nach beabsichtigter Applikation können jedoch die angegebenen Grenzen unter- oder überschritten werden.

Die unter Komponente C aufgeführten Entschäumer und Entlüfter C.4, Gleit- und Verlaufshilfsmittel C.5, thermisch härtenden oder strahlenhärtenden Hilfsmittel C.6, Substratnetzhilfsmittel C.7, Netz- und Dispergierhilfsmittel C.8, Hydrophobierungsmittel C.9, Haftvermittler C.10 und Hilfsmittel zur Verbesserung der Kratzfestigkeit C.11 lassen sich in ihrer Wirkung meist nicht streng voneinander abgrenzen. So wirken Gleit- und Verlaufshilfsmittel oftmals zusätzlich als Entschäumer und/oder Entlüfter und/oder als Hilfsmittel zur Verbesserung der Kratzfestigkeit. Strahlenhärtende Hilfsmittel können wiederum als Gleit- und Verlaufshilfsmittel und/oder Entlüfter und/oder auch als Substratnetzhilfsmittel wirken. Im Einzelfall können manche dieser Hilfsmittel auch die Funktion eines Haftvermittlers C.11 erfüllen. Entsprechend dem zuvor Gesagten kann daher ein bestimmtes Additiv mehreren der nachfolgend beschriebenen Gruppen C.4 bis C.11 zugeordnet sein.

Unter den Entschäumern der Gruppe C.4 finden sich siliciumfreie und siliciumhaltige Polymere. Bei den siliciumhaltigen Polymeren handelt es sich beispielsweise um unmodifizierte oder modifizierte Polydialkylsiloxane oder um verzweigte Copolymere, Kamm- oder Blockcopolymere aus Polydialkylsiloxan- und Polyethereinheiten, wobei letztere aus Ethylen- oder Propylenoxid zugänglich sind.

Zu den Entlüftern der Gruppe C.4 gehören beispielsweise organische Polymere, wie etwa Polyether und Polyacrylate, Dialkyl-, insbesondere Dimethylpolysiloxane, organisch modifizierte Polysiloxane, wie etwa arylalkylmodifizierte Polysiloxane oder auch Fluorsilicone. Die Wirkung von Entschäumern beruht im Wesentlichen darauf, Schaumbildung zu verhindern oder bereits gebildeten Schaum zu zerstören. Entlüfter wirken im Wesentlichen in der Weise, dass sie die Koaleszenz feinverteilter Gas- bzw. Luftblasen zu größeren Blasen im zu entlüftenden Medium, beispielsweise den erfindungsgemäßen Gemischen, fördern und damit das Entweichen des Gases (der Luft) beschleunigen. Da oftmals Entschäumer auch als Entlüfter eingesetzt werden können und umgekehrt, wurden diese Additive gemeinsam unter Gruppe C.4 subsumiert.

Solche Hilfsmittel sind beispielsweise kommerziell von der Firma Tego als TEGO® Foamex 800, TEGO® Foamex 805, TEGO® Foamex 810, TEGO® Foamex 815, TEGO® Foamex 825, TEGO® Foamex 835, TEGO® Foamex 840, TEGO® Foamex 842, TEGO® Foamex 1435, TEGO® Foamex 1488, TEGO® Foamex 1495, TEGO® Foamex 3062, TEGO® Foamex 7447, TEGO® Foamex 8020, Tego® Foamex N, TEGO® Foamex K 3, TEGO® Antifoam 2-18, TEGO® Antifoam 2-57, TEGO® Antifoam 2-80, TEGO® Antifoam 2-82, TEGO® Antifoam 2-89, TEGO® Antifoam 2-92, TEGO® Antifoam 14, TEGO® Antifoam 28, TEGO® Antifoam 81, TEGO® Antifoam D 90, TEGO® Antifoam 93, TEGO® Antifoam 200, TEGO® Antifoam 201, TEGO® Antifoam 202, TEGO® Antifoam 793, TEGO® Antifoam 1488, TEGO® Antifoam 3062, TEGOPREN® 5803, TEGOPREN® 5852, TEGOPREN® 5863, TEGOPREN® 7008, TEGO® Antifoam 1-60, TEGO® Antifoam 1-62, TEGO® Antifoam 1-85, TEGO® Antifoam 2-67, TEGO® Antifoam WM 20, TEGO® Antifoam 50, TEGO® Antifoam 105, TEGO® Antifoam 730, TEGO® Antifoam MR 1015, TEGO® Antifoam MR 1016, TE-GO® Antifoam 1435, TEGO® Antifoam N, TEGO® Antifoam KS 6, TEGO® Antifoam KS 10, TEGO® Antifoam KS 53, TEGO® Antifoam KS 95, TEGO® Antifoam KS 100, TEGO® Antifoam KE 600, TEGO® Antifoam KS 911, TEGO® Antifoam MR 1000, TEGO® Antifoam KS 1100, Tego® Airex 900, Tego® Airex 910, Tego® Airex 931, Tego® Airex 935, Tego® Airex 960, Tego® Airex 970, Tego® Airex 980 und Tego® Airex 985 und von der Firma BYK als Bk®-011, Bk®-019, Bk®-020, BYK®-021, BYK®-022, BYK®-023, BYK®-024, BYK®-025, BYK®-027, BYK®-031, BYK®-032, BYK®-033, BYK®-034, BYK®-035, Bk®-036, BYK®-037, BYK®-045, BYK®-051, BYK®-052, BYK®-053, BYK®-055, BYK®-057, BYK®-065, BYK®-067, BYK®-070, BYK®-080, BYK®-088, BYK®-141 und BYK®-A 530 erhältlich.

Die Hilfsmittel der Gruppe C.4 werden üblicherweise in einem Anteil von etwa 0,05 bis 5,0 Gew.-% bezogen auf das Gesamtgewicht der erfindungsgemäßen, flüssigkristallinen Mischungen eingesetzt.

In die Gruppe C.5 der Gleit- und Verlaufshilfsmittel gehören typischerweise siliciumfreie aber auch siliciumhaltige Polymere, wie z. B. Polyacrylate oder modifizierte, niedermolekulare Polydialkylsiloxane. Die Modifizierung besteht darin, dass ein Teil der Alkylgruppen durch verschiedenste organische Reste ersetzt ist. Bei diesen organischen Resten handelt es sich beispielsweise um Polyether, Polyester oder auch langkettige Alkylreste, wobei erstere am häufigsten Verwendung finden.

Die Polyetherreste der entsprechend modifizierten Polysiloxane werden dabei üblicherweise über Ethylen- und/oder Propylenoxideinheiten aufgebaut. Je höher der Anteil an diesen Alkylenoxideinheiten im modifizierten Polysiloxan ist, desto hydrophiler ist in der Regel das resultierende Produkt.

Solche Hilfsmittel sind beispielsweise kommerziell von der Firma Tego als TEGO® Glide 100, TEGO® Glide ZG 400, TEGO® Glide 406, TEGO® Glide 410, TEGO® Glide 411, TEGO® Glide 415, TEGO® Glide 420, TEGO® Glide 435, TEGO® Glide 440, TEGO® Glide 450, TEGO® Glide A 115, TEGO® Glide B 1484 (auch als Entschäumer und Entlüfter einsetzbar), TEGO® Flow ATF, TEGO® Flow ATF2, TEGO® Flow 300, TEGO® Flow 460, TEGO® Flow 425 und TEGO® Flow ZFS 460 erhältlich. Als strahlenhärtbare Gleit- und Verlaufshilfsmittel, welche darüber hinaus auch der Verbesserung der Kratzfestigkeit dienen, lassen sich die ebenfalls von der Firma Tego erhältlichen Produkte TEGO® Rad 2100, TEGO® Rad 2200, TEGO® Rad 2300, TEGO® Rad 2500, TEGO® Rad 2600, TEGO® Rad 2700 und TEGO® Twin 4000 einsetzen. Von der Firma BYK sind solche Hilfsmittel beispielsweise als BYK®-300 BYK®-306, BYK®-307, BYK®-310, BYK®-320, BYK®-322, BYK®-331, BYK®-333, BYK®-337, BYK®-341, Byk® 354, Byk® 361 N, BYK®-378 und BYK®-388 erhältlich.

Die Hilfsmittel der Gruppe C.5 werden üblicherweise in einem Anteil von etwa 0,01 bis 5,0 Gew.-% bezogen auf das Gesamtgewicht der erfindungsgemäßen, flüssigkristallinen Mischungen eingesetzt.

In die Gruppe C.6 gehören als strahlen härtende Hilfsmittel vor allem Polysiloxane mit endständigen Doppelbindungen, welche z. B. Bestandteil einer Acrylatgruppe sind. Solche Hilfsmittel können durch aktinische oder z. B. Elektronenstrahlung zur Vernetzung gebracht werden.

Diese Hilfsmittel vereinen in der Regel mehrere Eigenschaften auf sich. Sie können im unvernetzten Zustand als Entschäumer, Entlüfter, Gleit- und Verlaufshilfsmittel und/oder Substratnetzhilfsmittel wirken, im vernetzten Zustand erhöhen sie vor allem die Kratzfestigkeit z. B. von Beschichtungen oder Filmen, welche mit den erfindungsgemäßen Gemischen hergestellt werden können. Die Verbesserung des Glanzverhaltens, z. B. ebensolcher Beschichtungen oder Filme ist dabei im Wesentlichen als Folge der Wirkung dieser Hilfsmittel als Entschäumer, Entlüfter und/oder Gleit- und Verlaufshilfsmittel (im unvernetzten Zustand) zu sehen. Als strahlenhärtende Hilfsmittel lassen sich beispielsweise die von der Firma Tego erhältlichen Produkte TEGO® Rad 2100, TEGO® Rad 2200, TEGO® Rad 2500, TEGO® Rad 2600 und TEGO® Rad 2700 und das von der Firma BYK erhältliche Produkt BYK®-371 einsetzen.

Die Hilfsmittel der Gruppe C.6 werden üblicherweise in einem Anteil von etwa 0,01 bis 5,0 Gew.-% bezogen auf das Gesamtgewicht der erfindungsgemäßen, flüssigkristallinen Mischungen eingesetzt.

Die Hilfsmittel der Gruppe C.7 der Substratnetzhilfsmittel dienen vor allem der Erhöhung der Benetzbarkeit der Substrate, welche durch die erfindungsgemäßen, flüssigkristallinen Mischungen bedruckt oder beschichtet werden sollen. Die damit in der Regel einhergehende Verbesserung des Gleit- und Verlaufsverhaltens der erfindungsgemäßen, flüssigkristallinen Mischungen wirkt sich auf das Erscheinungsbild des fertigen (z. B. vernetzten) Drucks bzw. der fertigen (z. B. vernetzten) Schicht aus. Verschiedenste solcher Hilfsmittel sind kommerziell erhältlich, beispielsweise von der Firma Tego als TEGO® Wet KL 245, TEGO® Wet 250, TEGO® Wet 260 und TEGO® Wet ZFS 453 und von der Firma BYK als BYK®-306, BYK®-307, BYK®-310, BYK®-333, BYK®-344, BYK®-345, BYK®-346 und Byk®-348.

Gut geeignet sind auch die Produkte der Marke Zonyl® der Firma Dupont, wie Zonyl® FSA und Zonyl® FSG. Dabei handelt es sich um Fluor-haltige Tenside/Netzmittel.

Die Hilfsmittel der Gruppe C.7 werden üblicherweise in einem Anteil von etwa 0,01 bis 5,0 Gew.-% bezogen auf das Gesamtgewicht der erfindungsgemäßen, flüssigkristallinen Mischungen eingesetzt.

Die Hilfsmittel der Gruppe C.8 der Netz- und Dispergierhilfsmittel dienen vor allem der Verhinderung des Aus- und Aufschwimmens sowie des Absetzens von Pigmenten und kommen daher, sofern nötig, vor allem bei pigmentierten erfindungsgemäßen, flüssigkristallinen Mischungen in Frage.

Diese Hilfsmittel stabilisieren Pigmentdispersionen im Wesentlichen durch elektrostatische Abstoßung und/oder sterische Hinderung der additivierten Pigmentteilchen, wobei in letzterem Fall die Wechselwirkung des Hilfsmittels mit dem umgebenden Medium (z. B. Bindemittel) eine größere Rolle spielt. Da die Verwendung solcher Netz- und Dispergierhilfsmittel, z. B. auf dem technischen Gebiet der Druckfarben und Anstrichmittel, gängige Praxis ist, bereitet im gegebenen Fall die Auswahl solch eines geeigneten Hilfsmittels dem Fachmann in der Regel keine Schwierigkeiten.

Solche Netz- und Dispergierhilfsmittel werden kommerziell beispielsweise von der Firma Tego als TEGO® Dispers 610, TEGO® Dispers 610 S, TEGO® Dispers 630, TEGO® Dispers 700, TEGO® Dispers 705, TEGO® Dispers 710, TEGO® Dispers 720 W, TEGO® Dispers 725 W, TEGO® Dispers 730 W, TEGO® Dispers 735 W und TEGO® Dispers 740 W sowie von der Firma BYK als Disperbyk®, Disperbyk®-107, Disperbyk®-108, Disperbyk®-110, Disperbyk®-111, Disperbyk®-115, Disperbyk®-130, Disperbyk®-160, Disperbyk®-161, Disperbyk®-162, Disperbyk®-163, Disperbyk®-164, Disperbyk®-165, Disperbyk®-166, Disperbyk®-167, Disperbyk®-170, Disperbyk®-174, Disperbyk®-180, Disperbyk®-181, Disperbyk®-182, Disperbyk®-183, Disperbyk®-184, Disperbyk®-185, Disperbyk®-190, Anti-Terra®-U, Anti-Terra®-U 80, Anti-Terra®-P, Anti-Terra®-203, Anti-Terra®-204, Anti-Terra® 5 206, BYK®-151, BYK®-154, BYKO 155, BYK®-P 104 S, BYK®-P 105, Lactimon®, Lactimon®-WS und Bykumen® angeboten. Auch die o.g. Zonyl®-Marken, wie Zonyl® FSA unf Zonyl® FSG der Firma DuPont kommen hier in Betracht.

Die Dosierung der Hilfsmittel der Gruppe C.8 hängt hauptsächlich von der zu belegenden Oberfläche der Pigmente und vom mittleren Molgewicht des Hilfsmittels ab.

Für anorganische Pigmente und niedermolekulare Hilfsmittel rechnet man üblicherweise mit einem Anteil an letzterem von etwa 0,5 bis 2,0 Gew.-% bezogen auf das Gesamtgewicht aus Pigment und Hilfsmittel. Im Falle hochmolekularer Hilfsmittel erhöht sich der Anteil auf etwa 1,0 bis 30 Gew.-%.

Bei organischen Pigmenten und niedermolekularen Hilfsmitteln liegt der Anteil an letzterem bei etwa 1,0 bis 5,0 Gew.-% bezogen auf das Gesamtgewicht aus Pigment und Hilfsmittel. Im Falle hochmolekularer Hilfsmittel kann dieser Anteil im Bereich von etwa 10,0 bis 90 Gew.-% liegen. In jedem Fall empfehlen sich daher Vorversuche, welche jedoch vom Fachmann in einfacher Weise bewerkstelligt werden können.

Die Hydrophobierungsmittel der Gruppe C.9 können im Hinblick darauf verwendet werden, dass beispielsweise mit erfindungsgemäßen, flüssigkristallinen Mischungen erzeugte Drucke oder Beschichtungen wasserabweisende Eigenschaften erhalten. Hierdurch ist ein Quellen durch Wasseraufnahme und damit eine Veränderung z. B. der optischen Eigenschaften solcher Drucke oder Beschichtungen nicht mehr möglich oder zumindest stark unterdrückt. Darüber hinaus kann man bei Verwendung der Gemische z. B. als Druckfarbe im Offsetdruck deren Wasseraufnahme verhindern oder zumindest stark eindämmen.

Kommerziell erhältlich sind solche Hydrophobierungsmittel beispielsweise von der Firma Tego als Tego® Phobe WF, Tego® Phobe 1000, Tego® Phobe 1000 S, Tego® Phobe 1010, Tego® Phobe 1030, Tego® Phobe 1040, Tego® Phobe 1050, Tego® Phobe 1200, Tego® Phobe 1300, Tego® Phobe 1310 und Tego® Phobe 1400.

Die Hilfsmittel der Gruppe C.9 werden üblicherweise in einem Anteil von etwa 0,05 bis 5,0 Gew.-%, bezogen auf das Gesamtgewicht der erfindungsgemäßen, flüssigkristallinen Mischungen eingesetzt.

Haftvermittler der Gruppe C.10 dienen der Verbesserung der Haftung zweier in Kontakt stehender Grenzflächen. Hieraus wird direkt ersichtlich, dass im Wesentlichen nur der Anteil des Haftvermittlers wirksam ist, welcher sich in der einen, der anderen oder in beiden Grenzflächen befindet. Will man auf ein festes Substrat beispielsweise flüssige oder pastöse Druckfarben, Beschichtungs- oder Anstrichmittel aufbringen, so bedeutet dies in der Regel, dass man entweder letzteren die Haftvermittler direkt zusetzen oder das Substrat einer Vorbehandlung mit den Haftvermittlern unterziehen muss (auch als Primerung bezeichnet), d. h. dass man diesem Substrat geänderte chemische und/oder physikalisch Oberflächeneigenschaften verleiht.

Sofern das Substrat vorher mit einer Untergrundfarbe grundiert worden ist, bedeutet dies, dass die in Kontakt stehenden Grenzflächen nun jene der Untergrundfarbe einerseits und der erfindungsgemäßen, flüssigkristallinen Mischungen andererseits sind. Somit spielen in diesem Fall nicht nur die Haftungseigenschaften zwischen Substrat und Untergrundfarbe, sondern auch zwischen Untergrundfarbe und den erfindungsgemäßen, flüssigkristallinen Mischungen eine Rolle für die Haftung des gesamten Verbundes auf dem Substrat. Als Haftvermittler im weiteren Sinne können auch die bereits unter Gruppe C.7 aufgeführten Substratnetzhilfsmittel angesprochen werden, jedoch besitzen diese in der Regel nicht dasselbe Vermögen zur Haftungsvermittlung.

Im Hinblick auf die unterschiedlichste physikalische und chemische Beschaffenheit von Substraten und von beispielsweise für ihre Bedruckung oder Beschichtung vorgesehenen erfindungsgemäßen, flüssigkristallinen Mischungen ist die Vielzahl von Haftvermittlersystemen nicht verwunderlich. Haftvermittler auf Basis von Silanen sind beispielsweise 3-Aminopropyltrimethoxysilan, 3-Aminopropyltriethoxysilan, 3-Aminopropylmethyldiethoxysilan, N-Aminoethyl-3-aminopropyltrimethoxysilan, N-Aminoethyl-3-aminopropyl-methyldimethoxysilan, N-Methyl-3-aminopropyltrimethoxysilan, 3-Ureidopropyltriethoxysilan, 3-Methacryloyloxypropyltrimethoxysilan, 3-Glycidyloxypropyltrimethoxysilan, 3-Mercaptopropyltrimethoxysilan, 3-Chlorpropyltrimethoxysilan oder Vinyltrimethoxysilan. Diese und weitere Silane sind z. B. unter dem Markennamen DYNASILAN® von der Firma Hüls erhältlich.

Haftvermittler auf Basis von Titanaten/Zirkonaten und Titan-/Zirkoniumbisacetylacetonaten entsprechen beispielsweise den folgenden Formeln 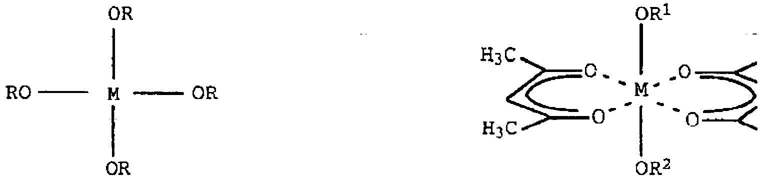 worin M für Titan oder Zirkonium steht und R, R¹ und R² C₁-C₄-Alkyl, wie z. B. Isopropyl oder n-Butyl bedeuten. Beispiele für solche Verbindungen sind etwa Tetraisopropyltitanat, Tetra-n-butyltitanat, Titan-bis(acetylacetonat)-diisopropanolat, Titanbis(acetylacetonat)-dibutanolat, Titan-bis(acetylacetonat)-monobutanolat-monoisopropanolat oder Titan-bis(acetylacetonat)-monoethanolat-monoisopropanolat.

Weitere als Haftvermittler verwendbare Titan- und Zirkoniumverbindungen sind n-Butylpolytitanat, Isopropyltriisostearoyltitanat, Isopropyl-tris(N-ethylaminoethylamino)titanat und Zirkoniumbis(diethylcitrat)-diisopropanolat. Solche und weitere Titan- und Zirkoniumverbindungen sind z. B. unter den Markennamen TYZOR® (Firma DuPont), Ken-React® (Firma Kenrich Petrochemicals Inc.) und Tilcom® (Firma Tioxide Chemicals) erhältlich. Als Haftvermittler können auch Zirkoniumaluminate dienen, wie sie z. B. unter dem Markennamen Manchem® (Firma Rhone Poulenc) erhältlich sind. Weiter kommen beispielsweise als haftvermittelnde Additive in Druckfarben oder Anstrichmitteln chlorierte Polyolefine (z. B. von den Firmen Eastman Chemical und Toyo Kasei erhältlich), Polyester (z. B. von den Firmen Hüls AG, BASF SE, Gebr. Borchers AG, Pluess-Staufer AG, Hoechst AG und Worlee erhältlich), Verbindungen auf Basis von Saccharose, beispielsweise Sucrosebenzoat oder Sucroseacetoisobutyrat (letzteres z. B. von der Firma Eastman Chemical erhältlich), Phosphorsäureester (z. B. von den Firmen The Lubrizol Company und Hoechst AG erhältlich) und Polyethylenimine (z. B. von der Firma BASF SE erhältlich) und beispielsweise als haftvermittelnde Additive in Druckfarben für den Flexo-, Folien- und Verpackungsdruck Kolophoniumester (z. B. von der Firma Robert Kraemer GmbH erhältlich) in Frage.

Üblicherweise wird man beispielsweise das zu bedruckende oder zu beschichtende Substrat entsprechend vorbehandeln, d. h. solche Additive als Primer verwenden. Von den Herstellern solcher Additive sind hierfür entsprechende technische Informationen in der Regel in Erfahrung zu bringen oder der Fachmann kann durch entsprechende Vorversuche diese Informationen in einfacher Weise erhalten.

Sollen diese Additive jedoch als Hilfsmittel der Gruppe C.10 den erfindungsgemäßen, flüssigkristallinen Mischungen zugegeben werden, so entspricht deren Anteil üblicherweise etwa 0,05 bis 5,0 Gew.-% bezogen auf das Gesamtgewicht der erfindungsgemäßen, flüssigkristallinen Mischungen. Diese Konzentrationsangaben dienen hierbei lediglich als Anhaltspunkt, da Menge und Identität des Additivs im Einzelfall durch die Natur des Substrats und des Bedruckungs-/Beschichtungsmittels bestimmt sind. Üblicherweise sind von den Herstellern solcher Additive für diesen Fall entsprechende technische Informationen verfügbar oder lassen sich vom Fachmann durch entsprechende Vorversuche in einfacher Weise ermitteln.

In die Gruppe C.11 der Hilfsmittel zur Verbesserung der Kratzfestigkeit gehören beispielsweise die von der Firma Tego erhältlichen und bereits oben genannten Produkte TEGO® Rad 2100, TEGO® Rad 2200, TEGO® Rad 2500, TEGO® Rad 2600 und TEGO® Rad 2700.

Diese Additive werden üblicherweise in einem Anteil von etwa 0,1 bis 5,0 Gew.-%, bezogen auf das Gesamtgewicht der erfindungsgemäßen, flüssigkristallinen Mischungen eingesetzt.

Bevorzugte chirale Dotierstoffe C.12 entsprechen den allgemeinen Formeln (P-Y-)ₚX, (P-Y-A-Y-)ₚX und (P-Y-A-Y-M-Y-)ₚ-X, in welchen die Variablen P reaktiven oder unreaktiven Resten, Y verknüpfenden Einheiten, wie beispielsweise chemischen Einfachbindungen, Sauerstoffatomen, CO, COO oder O-COO, und A Spacern entsprechen, M mesogene Gruppen bezeichnet, p für Werte von 1, 2, 3, 4, 5 oder 6 und X für entsprechende p-wertige chirale Reste steht, wobei die p an den chiralen Rest X gebundenen Gruppierungen gleich oder verschieden sein können.

Mögliche Reste X sind beispielsweise auf den Seiten 5 bis 9 der Schrift WO 95/16007 A1 gezeigt, wobei insbesondere die zweiwertigen Reste 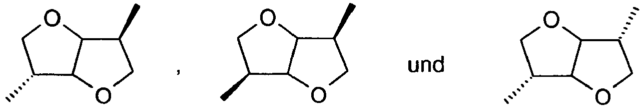 zu nennen sind.

Weitere chirale Dotierstoffe, welche die genannten sowie andere geeignete chirale Reste X enthalten, sind beispielsweise in den Schriften EP 0 747 382 A1, EP 0 750 029 A1, EP 1 136 478 A1 und DE 198 43 724 A1 genannt.

Weiterer Gegenstand der vorliegenden Erfindung sind Oligomere oder Polymere, welche durch Oligomerisation oder Polymerisation von erfindungsgemäßen flüssigkristallinen Mischungen erhältlich sind. Dieses erfindungsgemäßen Oligomere oder Polymere können insbesondere auch in Form von Filmen, d.h. selbsttragenden Schichten gleichförmiger Dicke, vorliegen. Diese Filme können sich auf Substraten befinden, welche so beschaffen sind, dass durch geeignete Maßnahmen eine leichte Ablösung und Übertragung auf andere Substrate zum permanenten Verbleib möglich ist. Solche Filme sind beispielsweise im Bereich der Folienbeschichtung und in Kaschierverfahren verwendbar.

Desweiteren lassen sich solche Filme -in ihren Eigenschaften dem entsprechenden Verwendungszweck angepasst- in verschiedensten Bereichen einsetzen. Beispielsweise können sie in Vorrichtungen zur Darstellung optischer Information Verwendung finden. Solche Vorrichtungen sind etwa Video- oder Overheadprojektoren, elektrophoretische Anzeigevorrichtungen, Verkehrsanzeigen, LCDs zur Verwendung in Computermonitoren, Fernsehern, Bildschirmen in Druckern oder Küchengeräten sowie Reklametafeln, Beleuchtungen und Hinweistafeln desweiteren mobile Bildschirme wie z.B. Bildschirme in Handys, Laptops, Digitalkameras, Fahrzeugen sowie Zielanzeigen an Bussen und Bahnen. Sie können in diesen Vorrichtungen in verschiedenster Funktion enthalten sein, beispielsweise als Farbfilter oder Folien für die Erzeugung von wellenlängen-selektivem oder breitbandig polarisiertem Licht.

Weiterer Gegenstand der vorliegenden Erfindung ist ein Verfahren zum Bedrucken oder Beschichten von Substraten, welches dadurch gekennzeichnet ist, dass man erfindungsgemäße flüssigkristalline Mischungen auf das Substrat aufbringt und anschließend polymerisiert.

Hinsichtlich der Verfahrensweise zum Bedrucken oder Beschichten von Substraten mit flüssigkristallinen Materialien sei sinngemäß auf die Schrift WO 96/02597 A2 verwiesen. Darüberhinaus ist auch eine mit Hilfe des erfindungsgemäßen Verfahrens hergestellte, und die ursprüngliche Substratoberfläche teilweise oder vollständig bedeckende polymerisierte Schicht als Substrat im Sinne der Anmeldung zu verstehen, so dass erfindungsgemäß auch die Herstellung von mehrfach bedruckten und/oder beschichteten Substraten umfasst ist.

Anzumerken ist hier weiter, dass unter "Bedrucken" üblicherweise das unvollständige Bedecken der Substratoberfläche, unter "Beschichten" das vollständige Bedecken der Substratoberfläche verstanden wird.

Als Substrate kommen desweiteren neben Papier- und Kartonageprodukten, beispielsweise für Tragetaschen, Zeitschriften, Broschüren, Geschenkverpackungen und Verpackungsmaterialien für Gebrauchs-, Genuss- und Luxusgüter, auch Folien, etwa für dekorative und nicht-dekorative Verpackungszwecke, sowie Textilien jedweder Art und Leder in Frage. Desweiteren kommen als Substrate auch solche zur Herstellung von Banknoten, Wertpapieren, Eintrittskarten u.ä. verwendete Materialien in Betracht.

Weitere Substrate sind aber auch Güter der (Unterhaltungs-)Elektronik, wie etwa Musikcassetten (MCs), SVHS- und VHS-Cassetten, Minidisks (MDs), Compactdisks (CDs), Digital Versatile Discs (DVDs), Blu-ray Discs (BDs) und die entsprechenden Wiedergabe- und/oder Aufnahmegeräte, Fernseher, Radios, Telefone/Handys, EDV-Geräte usw. und Güter aus dem Freizeit-, Sport-, Haushalts- und Spielsektor, wie etwa Fahrräder, Kinder-fahrzeuge, Skier, Snow- und Surfboards, Inline-Skater und Roll- und Schlittschuhe sowie Haushaltsgeräte. Darüber hinaus sind unter solchen Substraten beispielsweise auch Schreibutensilien und Brillengestelle zu verstehen.

Weitere Substrate sind aber auch verschiedenste Folien, welche in optischen oder elektrooptischen Bauteilen oder bei deren Herstellung Verwendung finden. Solche Folien bestehen beispielsweise aus Polyvinylalkohol (PVA), Triacetylcellulose (TAC), Polyimid (PI), Polyvinylcinnamat (PVC) oder Polyolefinen, wie etwa Polynorbornen, und können beispielsweise (Breitband-)Polarisatoren, lichtleitende Elemente für die Hintergrundbeleuchtung in LCDs (sogenannte "light guides"), Folien für die Verteilung des Lichts (sogenannte "BEFs", d.h. "brightness enhancement films") und Folien für die Erzeugung von polarisiertem Licht in LCDs (sogenannte "DBEFs", d.h. "dual brightness enhancement films") sein. Weitere Substrate in diesem Zusammenhang können aber auch bestimmte Baugruppen der LCDs sein, wie etwa Glas- oder Polymerscheiben, welche gegebenenfalls noch eine transparente leitfähige Beschichtung, beispielsweise aus Indium-Zinn-Oxid (ITO), besitzen.

Light guides oder BEFs können beispielsweise direkt mit erfindungsgemäßen nematischen (d.h. es sind keine chiralen Verbindungen C.12 enthalten) oder chiral-nematischen (d.h. es sind chirale Verbindungen C.12 enthalten) Mischungen beschichtet und diese anschließend polymerisiert werden. Der Beschichtungvorgang kann hierbei mehr oder weniger oft mit erfindungsgemäßen flüssigkristallinen Mischungen gleicher oder unterschiedlicher Zusammensetzung wiederholt werden, um entsprechende optische Komponenten, wie etwa Verzögerungsfilme (sogenannte "retardation films"), (Breitband-)Polarisatoren und optische Filter zu erzeugen. Hierdurch lässt sich ein entsprechend kompakterer Aufbau der optischen Bauteile in LCDs herstellen.

Weiter kann durch das erfindungsgemäße Verfahren eine geeignete nematische Schicht als Verzögerungsfilm auf einen, zirkular polarisiertes Licht liefernden (Breitband-)Polarisator aufgebracht werden. Hierdurch kann zirkular polarisiertes Licht in linear polarisiertes überführt werden. Der (Breitband-)Polarisator kann hierbei ebenfalls aus erfindungsgemäßen Mischungen, gegebenenfalls unter Verwendung des erfindungsgemäßen Verfahrens, hergestellt worden sein.

Weiter Substrate, welche insbesondere für die Herstellung von erfindungsgemäßen Wärmeisolationsschichten bzw. wärmeisolierenden Folien und Laminaten in Betracht kommen, sind die in der internationalen PCT-Anmeldung PCT/EP2009/ 057533 aufgeführten Trägerfolien. _

Explizit sind hier als Materialien der Trägerfolien zu nennen Polyethylenterephthalat, Polyethylennaphthalat, Polyvinylbutyral, Polyvinylchlorid, Weichpolyvinylchlorid, Polymethylmethacrylat, Poly(ethylen-co-vinylacetat), Polycarbonat, Cellulosetriacetat, Polyethersulfon, Polyester, Polyamid, Polyolefine und Acrylharze. Bevorzugt sind hierunter Polyethylenterephthalat, Polyvinylbutyral, Polyvinylchlorid, Weichpolyvinylchlorid und Polymethylmethacrylat.

Bevorzugt ist die Trägerfolie biaxial orientiert.

Weitere Substrate sind aber auch im Bausektor anzutreffende Oberflächen, wie Gebäudewände oder auch Fensterscheiben. In letzterem Fall kann neben einem dekorativen auch ein funktioneller Effekt gewünscht sein. So ist es möglich, Mehrfachschichten auf dem Fenstermaterial zu erzeugen, deren einzelne Schichten verschiedene chemisch-physikalische Eigenschaften besitzen. Werden etwa unter Zugabe eines Enantiomeren einer chiralen Verbindung C.12 sowie des entsprechenden optischen Antipoden einzelne Schichten der polymerisierten flüssigkristallinen Mischungen mit entgegengesetzter Verdrillung oder werden unter Zugabe unterschiedlicher Konzentrationen an chiraler Verbindung C.12 einzelne Schichten der polymerisierten flüssigkristallinen Mischungen gleichen Drehsinns aber jeweils unterschiedlicher Ganghöhe und somit unterschiedlicher Reflektionseigenschaften aufgebracht, so können gezielt bestimmte Wellenlängen oder Wellenlängenbereiche des Lichtspektrums reflektiert werden. Hierdurch ist beispielsweise eine IR- oder UV-reflektierende Fensterbeschichtung möglich.

Dementsprechend ist weiterer Gegenstand der vorliegenden Erfindung die Verwendung von erfindungsgemäßen flüssigkristallinen Mischungen, welche als Komponente C mindestens einen chiralen Dotierstoff (Komponente C.12) enthalten, zur Herstellung von Wärmeisolationsschichten, umfassend eine oder mehrere cholesterische Schichten, die im infraroten Wellenlängenbereich, vorzugsweise im Wellenlängenbereich von 750 nm bis 2000 nm, mindestens 40 %, insbesondere mindestens 45 % der auftreffenden Strahlung reflektieren.

Weiterer Gegenstand der vorliegenden Erfindung ist die Verwendung von erfindungsgemäßen, flüssigkristallinen Mischungen, welche als Komponente C mindestens einen chiralen Dotierstoff (Komponente C.12) enthalten, zur Herstellung von Wärmeisolationsschichten, umfassend eine oder mehrere cholesterische Schichten, die im Wellenlängenbereich von 390 nm bis 750 nm eine Transmission von mindestens 80%, insbesondere mindestens 90 % der auftreffenden Strahlung aufweisen.

Insbesondere werden im Rahmen der vorliegenden Erfindung beansprucht Wärmeisolationsschichten, welche eine oder mehrere cholesterische Schichten umfassen, die im infraroten Wellenlängenbereich, vorzugsweise im Wellenlängenbereich von 750 nm bis 2000 nm, mindestens 40%, insbesondere mindestens 45 % der auftreffenden Strahlung reflektieren, welche unter Verwendung von erfindungsgemäßen, flüssigkristallinen Mischungen, enthaltend als Komponente C mindestens einen chiralen Dotierstoff (Komponente C.12), erhältlich sind.

Weiter werden im Rahmen der vorliegenden Erfindung auch beansprucht Wärmeisolationsschichten, welche eine oder mehrere cholesterische Schichten umfassen, die im Wellenlängenbereich von 390 nm bis 750 nm eine Transmission von mindestens 80 %, insbesondere mindestens 90 % der auftreffenden Strahlung aufweisen, welche unter Verwendung von erfindungsgemäßen, flüssigkristallinen Mischungen, enthaltend als Komponente C mindestens einen chiralen Dotierstoff (Komponente C.12), erhältlich sind.

Die erfindungsgemäßen Wärmeisolationsschichten können hierbei selbsttragende Schichten oder Filme sein, die im Wesentlichen nur aus erfindungsgemäßen chiral-nematischen (d.h. es sind chirale Verbindungen C.12 enthalten), polymerisierten Mischungen bestehen, oder aber auch Laminate, welche die bereits oben erwähnte(n) Trägerfolie(n) als integralen Bestandteil enthalten.

Weiter kann die Trägerfolie einseitig oder beidseitig mit den erfindungsgemäßen chiral-nematischen (d.h. es sind chirale Verbindungen C.12 enthalten) und polymerisierten Mischungen beschichtet sein.

Im Falle der einseitigen Beschichtung kann die Trägerfolie in der Wärmeisolationsschicht verbleiben und damit deren integraler Bestandteil werden, oder die Trägerfolie übernimmt lediglich die Funktion eines Trägers während der Herstellung der Wärmeisolationschicht und wird anschließend unter Verbleib eines selbsttragenden wärmeisolierenden Films bzw. einer selbsttragenden wärmeisolierenden Schicht entfernt.

Im Falle der beidseitigen Beschichtung verbleibt die Trägerfolie naturgemäß in der Wärmeisolationsschicht und wird deren integraler Bestandteil.

Zu diesem Aspekt der erfindungsgemäßen flüssigkristallinen Mischungen, speziell im Hinblick auf Wärmeisolationsschichten, sei -neben der älteren PCT-Anmeldung PCT/EP2009/ 057533- sinngemäß auch auf die Schrift WO 99/19267 A1 verwiesen. Weiterer Gegenstand der vorliegenden Erfindung ist die Verwendung der erfindungsgemäßen flüssigkristallinen Mischungen oder der erfindungsgemäßen Oligomere oder Polymere zur Herstellung optischer oder elektrooptischer Bauteile. Als solche sind z.B. LCDs sowie deren Komponenten, beispielsweise (Breitband-)Polarisatoren, optische Filter, Verzögerungsfilme (sogenannte "retardation films") und BEFs zu nennen.

Hinsichtlich der Herstellung solcher Komponenten basierend auf polymerisierbaren flüssigkristallinen Materialien sei sinngemäß etwa auf die Schrift WO 00/37585 A1 verwiesen.

Im Hinblick auf die Verwendung von erfindungsgemäßen chiral-nematischen Mischungen zur Herstellung von (Breitband-)Polarisatoren sei sinngemäß beispielsweise auf die Schriften US 6,421,107, US 6,417,902, US 6,061,108, US 6,099,758, US 6,016,177, US 5,948,831, US 5,793,456, US 5,691,789 und US 5,506,704 verwiesen.

Im Hinblick auf die Verwendung von erfindungsgemäßen flüssigkristallinen Mischungen zur Herstellung von DBEFs sei sinngemäß beispielsweise auf die Schriften US 4,525,413, US 5,828,488 und US 5,965,247 verwiesen.

Die beiden letzteren Schriften beschreiben Laminate von Polymerschichten, welche in ihren optischen Eigenschaften so beschaffen sind, dass eine Schicht S¹ entweder isotropes oder anisotropes, die benachbarte Schicht S² dagegen von S¹ abweichendes anisotropes optisches Verhalten zeigt. Der Brechungsindex n₁¹ in der einen Ebenenrichtung von S¹ entspricht dabei in seinem Wert im Wesentlichen dem Brechungsindex n₁² in derselben Ebenenrichtung von S², die Brechungsindices n₂¹ bzw. n₂² in der jeweils senkrecht dazu stehenden Ebenenrichtung von S¹ bzw. S² differieren hingegen. Lichtstrahlen, welche auf diese Laminate auftreffen werden daher je nach ihrer Polarisationsrichtung entweder transmittiert (wenn n₁¹ und n₁² im Wesentlichen gleich sind) oder reflektiert (wenn n₂¹ und n₂² voneinander verschieden sind). Die anisotropen Schichten S² können daher -im Wechsel mit Polymerschichten mit geeignetem isotropem bzw. anisotropem Brechungsindex- aus entsprechenden, durch Polymerisation von erfindungsgemäßen nematischen Mischungen erhaltenen Polymeren oder Oligomeren bestehen. Als Polymerschichten S¹ kommen beispielsweise auch Klebstoffe in Frage, welche die anisotropen Schichten S² miteinander verkleben, oder Kunststoff-Folien mit geeigneter Glasübergangstemperatur, welche bei entsprechender Temperaturbehandlung zusammen mit den Schichten S² das gewünschte Laminat bilden. Zudem kann man eine Polymerschicht S¹ mit einer erfindungsgemäßen nematischen Mischung beschichten, eine weitere Polymerschicht S¹ aufbringen und dann die zwischen beiden Polymerschichten S¹ befindliche Mischung polymerisieren. Unabhängig von der gewählten Verfahrensweise zur Herstellung solcher Laminate muss natürlich eine hinreichend gute Adhäsion der Schichten S¹ und S² miteinander gewährleistet sein.

Die erfindungsgemäßen flüssigkristallinen Mischungen lassen sich aber auch als disperse flüssigkristalline Phase in sogenannten "polymer dispersed liquid crystals" ("PDLCs") verwenden. Solche PDLCs können grundsätzlich entweder eine isotrope Polymermatrix und sowohl eine makroskopisch-isotrope als auch anisotrope disperse flüssigkristalline Phase oder eine anisotrope Polymermatrix und sowohl eine makroskopisch-isotrope als auch anisotrope disperse flüssigkristalline Phase aufweisen, wobei die makroskopisch-isotrope Phase aus der statistischen Verteilung mikroskopischanisotroper Domänen resultiert.

In der Regel wird zur Herstellung solcher PDLCs von einer (in der Regel optisch anisotropen) Polymerfolie ausgegangen, in welcher die flüssigkristalline Phase in Form feinster Einschlüsse, üblicherweise im Mikrometer- oder Submikrometergrößenbereich, gleichmäßig dispergiert vorliegt. Durch Verstrecken der Polymerfolie wird sowohl der Polymermatrix als auch der dispergierten Phase ein anisotropes optisches Verhalten aufgezwungen. Finden erfindungsgemäße flüssigkristalline Mischungen Verwendung, so lässt sich der anisotrope Zustand der dispergierten Phase durch Polymerisation einfrieren und damit beispielsweise eine deutlich bessere Temperatur(wechsel)-beständigkeit erzielen. Als Polymermatrix findet hierbei meist Polyvinylalkohol Verwendung.

Desweiteren können erfindungsgemäße chiral-nematische Mischungen -sie enthalten mindestens einen chiralen Dotierstoff C.12- beispielsweise auch zur Herstellung von optischen Bauteilen verwendet werden, wie sie in den Schriften US 5,235,443 und US 5,050,966 beschrieben werden.

Die erfindungsgemäßen flüssigkristallinen Mischungen können desweiteren auch als flüssigkristallines Farbmittel oder zur Herstellung flüssigkristalliner Farbmittel Verwendung finden. Die Verwendung als Farbmittel ist möglich, wenn die Mischungen per se Farbigkeit besitzen. Diese Farbigkeit kann dabei auf Interferenzeffekten einer vorliegenden chiral-nematischen Phase und/oder auf Absorptionseffekten enthaltener Farbstoffe und/oder Pigmente beruhen. Desweiteren können die Mischungen - unabhängig davon ob sie Farbigkeit aufweisen oder nicht- auch zur Herstellung von Farbmitteln dienen. Hinsichtlich der Herstellung von flüssigkristallinen Farbmitteln und deren Verwendung zum Bedrucken oder Beschichten von Substraten sei sinngemäß auf die Schrift WO 96/02597 A2 verwiesen.

Die erfindungsgemäßen, flüssigkristallinen Mischungen können desweiteren in der Herstellung von Dispersionen und Emulsionen, welche bevorzugt auf Wasser basieren, Verwendung finden. Zur Herstellung solcher Dispersionen und Emulsionen unter Verwendung von flüssigkristallinen Materialien sei hierbei auf die WO-Schriften 96/02597 A2 und 98/47979 A1 verwiesen. Diese Dispersionen und Emulsionen können ebenfalls zum Bedrucken und Beschichten von Substraten, wie sie beispielhaft zuvor bereits beschrieben wurden, verwendet werden.

Weiter können die erfindungsgemäßen Mischungen auch Verwendung bei der Herstellung von Pigmenten finden. Die Herstellung solcher Pigmente ist bekannt und beispielsweise ausführlich in der Schrift WO 99/11733 A1 beschrieben. Darüber hinaus lassen sich aber auch in Form und Größe voreingestellte Pigmente unter Verwendung von Drucktechniken oder mit Hilfe von Netzen, in deren Zwischenräumen sich die flüssigkristallinen Mischungen befinden, herstellen. Der nachfolgenden Polymerisation der flüssigkristallinen Mischungen schließt sich hierbei das Ab- bzw. Herauslösen vom Substrat bzw. aus dem Netz an. Diese Vorgehensweisen sind in den WO-Schriften 96/02597 A1, 97/27251 A1, 97/27252 A1 und der Schrift EP 0 931 110 A1 detailliert beschrieben.

Diese Pigmente können einschichtig sein oder einen Mehrschichtaufbau aufweisen. Letztere Pigmente sind üblicherweise nur herstellbar, wenn Beschichtungsverfahren zur Anwendung kommen, in welchen sukzessive mehrere Schichten übereinander erzeugt und abschließend einer mechanischen Zerkleinerung unterworfen werden. Die nachfolgenden Beispiele sollen die Erfindung näher erläutern, ohne sie jedoch einzuschränken.

### Beispiele:

### I. Herstellung von erfindungsgemäßen, flüssigkristallinen Mischungen und von Vergleichsmischungen

Basierend auf den nematischen Verbindungen
LC 1 (Komponente A) 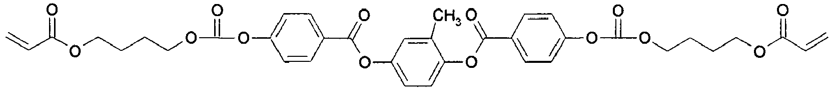 und
LC 2 (Komponente B): 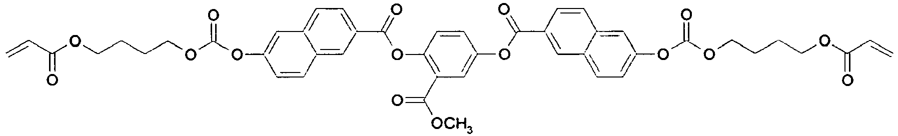 sowie dem chiralen Dotierstoff
DS (Komponente C.12) 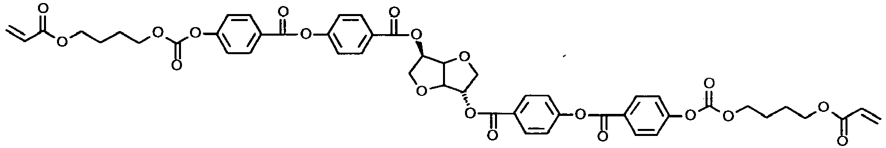 wurden Mischungen A bis E hergestellt. Die relativen Anteile von LC 1 und LC 2 in Gew.-% und mol-% sind in Tabelle 1a bzw. 1 b, die absoluten Mengen in Tabelle 2 aufgeführt.

**Tabelle 1a**

| Gew.-% bezogen auf Gesamtgewicht aus LC 1 und LC 2 | Mischung A (Vergleich) | Mischung B (Vergleich) | Mischung C (erfindungsgemäß) | Mischung D (Vergleich) | Mischung E (Vergleich) |
|---|---|---|---|---|---|
| LC 1 | 0,0 | 100,0 | 75,0 | 50,0 | 25,0 |
| LC 2 | 100,0 | 0,0 | 25,0 | 50,0 | 75,0 |

**Tabelle 1 b**

| mol-% bezogen auf Gesamtgewicht aus LC 1 und LC 2 | Mischung A (Vergleich) | Mischung B (Vergleich) | Mischung C (erfindungsgemäß) | Mischung D (Vergleich) | Mischung E (Vergleich) |
|---|---|---|---|---|---|
| LC 1 | 0,0 | 100,0 | 71,4 | 45,4 | 21,7 |
| LC 2 | 100,0 | 0,0 | 28,6 | 54,6 | 78,3 |

**Tabelle 2**

| | Mischung A (Vergleich) | Mischung B (Vergleich) | Mischung C (erfindungsgemäß) | Mischung D (Vergleich) | Mischung E (Vergleich) |
|---|---|---|---|---|---|
| LC 1 (Komponente A) | 0.000g | 31,334g | 23,500g | 15,667g | 7,833g |
| LC 2 (Komponente B) | 31,334g | 0.000g | 7,833g | 15,667g | 23,500g |
| DS (Komponente C.12) | 1,650g | 1,650g | 1,650g | 1,650g | 1,650g |
| Gesamtgewicht LC 1, LC 2 und DS | 32,984g | 32,984g | 32,984g | 32,984g | 32,984g |
| Irgacure 907 (Komponente C.1) | 1,649g | 1,649g | 1,649g | 1,649g | 1,649g |
| Cyclopentanon (Komponente C.3) | 67,017g | 67,017g | 67,017g | 67,017g | 67,017g |
| Byk 361 N (Komponente C.5) | 1,649g | 1,649g | 1,649g | 1,649g | 1,649g |

Die Summe der Anteile von LC 1 und LC 2 einerseits und DS andererseits betrug in allen Mischungen A bis E 95 Gew.-% bzw. 5 Gew.-%, bezogen auf das Gesamtgewicht aus LC 1, LC 2 und DS.

Die Mischungen A bis E wurden durch 5minütiges Rühren der Komponenten bei 50°C mittels Magnetrührer hergestellt und anschließend filtriert (Whatman Puradisc 25TF, 1µm Membranfilter).

Anschließend wurden je 2 - 2,5 ml der Mischungen auf das Polymersubstrat (PET Lumirror 4001, Filmdicke 50µm, ganzflächig zur besseren Orientierung der Mischungen fünfmal mit Samt gerieben; Fa. Torray) aufgebracht und mit einer 30µm-Spiralrakel zu einem Film gezogen. Nach zweiminütigem Abdampfen des Lösungsmittels im geschlossenen Abzug (ohne Luftzug) bei 120°C, erfolgte die zweiminütige Polymerisation unter UV-Licht (UV-AB mit Quarzfilter). Es ergab sich eine Schichtdicke von ca. 4,5 - 5 µm.

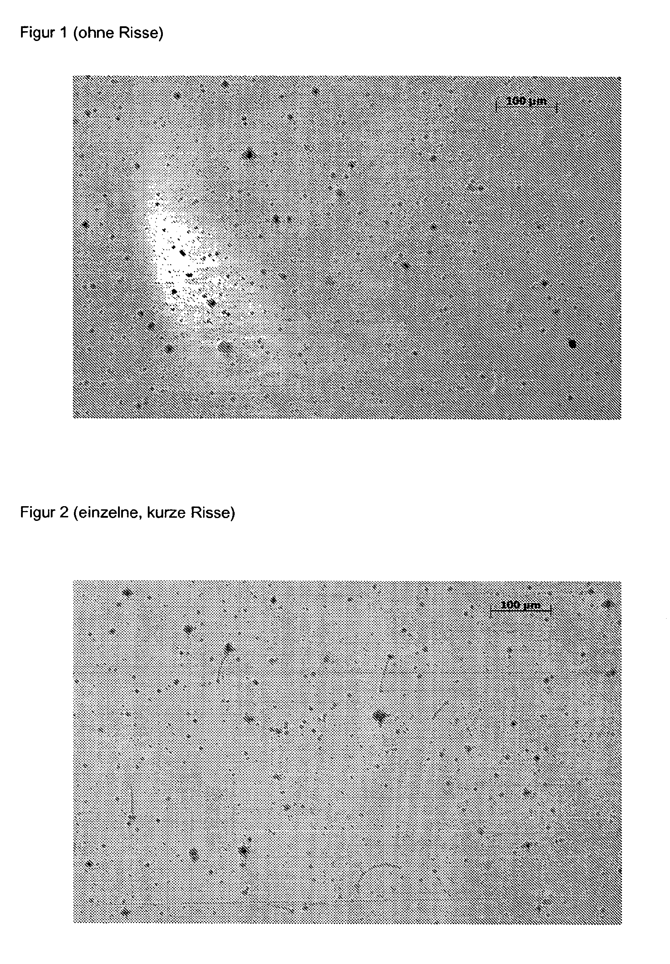

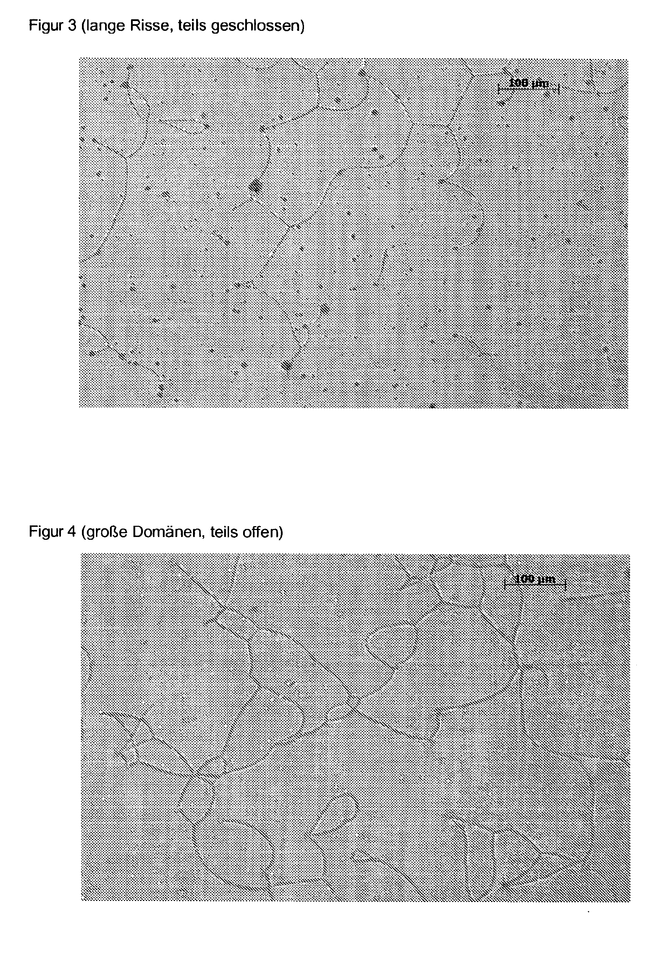

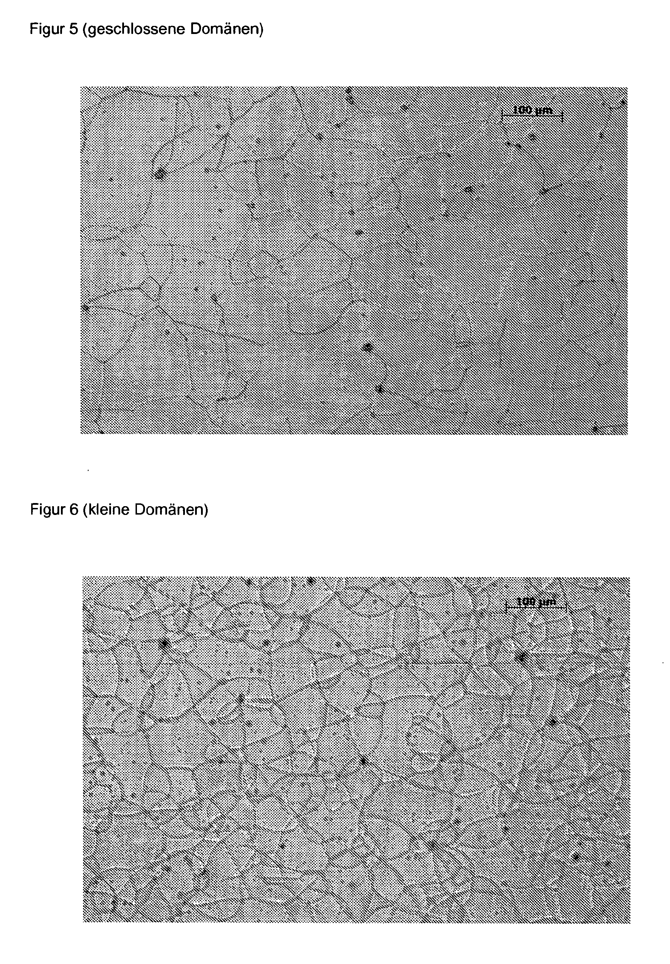

Die qualitative Bewertung der erhaltenen Filme erfolgte unter dem Lichtmikroskop mit einer Vergrößerung von 100 : 1. Verglichen wurde gegen Aufnahmen von Filmen unterschiedlicher Güte (Figuren 1 bis 6), die Bewertung erfolgte mit Schulnoten von 1 (Figur 1) bis 6 (Figur 6).

In Tabelle 3 sind die Ergebnisse für die aus den Mischungen A bis E erhaltenen Polymerfilme aufgeführt.

**Tabelle 3**

| Mischung | Filmqualität (Schulnote) | Schichtdicke |
|---|---|---|
| A (Vergleich) | 4 | 4,7µm |
| B (Vergleich) | 5 | 4,8µm |
| C (erfindungsgemäß) | 1 | 4,9µm |
| D (Vergleich) | 2,5 | 5,0µm |
| E (Vergleich) | 4,5 | 4,9µm |

Die Doppelbrechung und Breite der spektralen Reflexion der Polymerfilme änderten sich weitgehend linear zwischen den Werten für 100 % LC 1 (0 % LC 2) und 100 % LC 2 (0% LC 1).

### II. Änderung der Komponenten der Mischungen A bis E:

Analoge Ergebnisse wurden erhalten bei der Änderung des Lösungsmittels (Komponente C.3), des Photoinitiators (Komponente C.1) und der zugegebenen Menge an Verlaufshilfsmittel (Komponente C.5).
Lösungsmittel: Cyclohexanon/Essigsäureethylester 80 : 20 (anstelle von Cyclopentanon)
Photoinitiator: Irgacure OXE01 (anstelle von Irgacure 907)
Menge Verlaufshilfsmittels (Byk 361 N): 0,825g (anstelle von 1,649g)

### III. Änderung von Substrat und Auftragsverfahren

Analoge Ergebnisse wurden erhalten bei Änderung des Substrats und des Auftragsverfahrens für die Mischungen A bis E.
Substrat: Polyimid beschichtetes Glas (anstelle von Lumirror 4001)
Auftragsverfahren: Spincoating (anstelle von Spiralrakel)

Erwähnt werden muss, dass natürlich nicht jedes Substrat geeignet ist. Sofern jedoch eine Orientierung der erfindungsgemäßen, flüssigkristallinen Mischungen auf dem Substrat erreicht werden kann bzw. letzeres durch die erfindungsgemäßen, flüssigkristallinen Mischungen benetzt wird, ist eine deutliche Verbesserung der Orientierung und der Qualität der erhaltenen Filme zu beobachten.

## Patentansprüche

1. Flüssigkristalline Mischungen, enthaltend
als Komponente A:
eine oder mehrere Verbindungen der allgemeinen Formel I 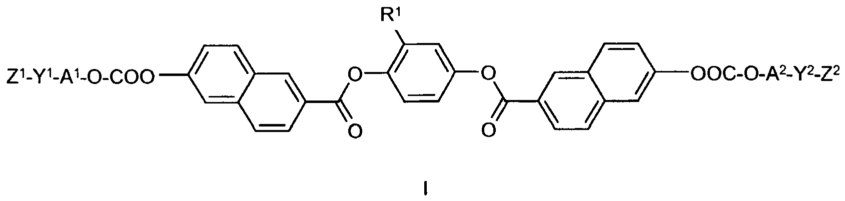 in welcher die Variablen folgende Bedeutung haben:
Z¹, Z² unabhängig voneinander 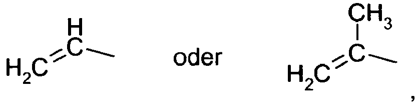
A¹, A² unabhängig voneinander Spacer mit 4 bis 8 Kohlenstoffatomen,
Y¹, Y² unabhängig voneinander eine chemische Einfachbindung, Sauerstoff, -CO-, -O-CO- oder -CO-O-,
R¹ Wasserstoff, C₁-C₆-Alkyl oder CO-O-C₁-C₆-Alkyl,
als Komponente B:
eine oder mehrere Verbindungen der allgemeinen Formel II 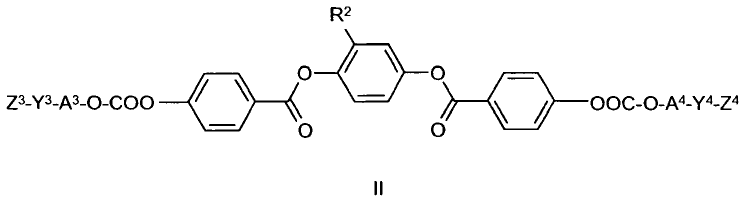 in welcher die Variablen folgende Bedeutung haben:
Z³, Z⁴ unabhängig voneinander 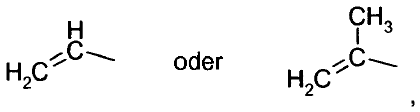
A³, A⁴ unabhängig voneinander Spacer mit 4 bis 8 Kohlenstoffatomen,
Y³, Y⁴ unabhängig voneinander eine chemische Einfachbindung, Sauerstoff, -CO-, -O-CO- oder -CO-O-,
R² Wasserstoff, C₁-C₆-Alkyl oder CO-O-C₁-C₆-Alkyl,
wobei der Anteil der Komponente A 22,5 mol% bis 32,5 mol-% und der Anteil der Komponente B 67,5 mol-% bis 77,5 mol% beträgt, bezogen auf die Gesamtmolzahl der Komponenten A und B, und die Anteile der Komponenten A und B sich zu 100 mol% ergänzen, und
als Komponente C:
eine oder mehrere Substanzen ausgewählt aus der Gruppe bestehend aus:
C.1 Photoinitiatoren;
C.2 Reaktiwerdünnern, welche photopolymerisierbare Gruppen enthalten;
C.3 Verdünnungsmitteln;
C.4 Entschäumern und Entlüftern;
C.5 Gleit- und Verlaufsmitteln;
C.6 thermisch härtenden und/oder strahlenhärtenden Hilfsmitteln;
C.7 Substratnetzhilfsmitteln;
C.8 Netz- und Dispergierhilfsmitteln;
C.9 Hydrophobierungsmitteln;
C.10 Haftvermittlern;
C.11 Hilfsmitteln zur Verbesserung der Kratzfestigkeit; und
C.12 chiralen Dotierstoffen, und
gegebenenfalls als Komponente D:
eine oder mehrere Substanzen ausgewählt aus der Gruppe bestehend aus:
D.1 Farbstoffen; und
D.2 Pigmenten.

2. Flüssigkristalline Mischungen nach Anspruch 1, in welchen Z¹-Y¹ und Y²-Z² in Formel I der Komponente A und Z³-Y³ und Y⁴-Z⁴ in Formel II der Komponente B reaktive Gruppierungen 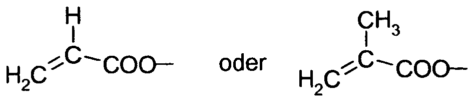 bedeuten.

3. Oligomere oder Polymere, erhältlich durch Oligomerisation oder Polymerisation von flüssigkristallinen Mischungen gemäß Anspruch 1 oder 2.

4. Verfahren zum Bedrucken oder Beschichten von Substraten, **dadurch gekennzeichnet, dass** man flüssigkristalline Mischungen gemäß Anspruch 1 oder 2 auf die Substrate aufbringt und anschließend polymerisiert.

5. Verwendung von flüssigkristallinen Mischungen gemäß Anspruch 1 oder 2 oder von Oligomeren oder Polymeren gemäß Anspruch 3 zur Herstellung optischer oder elektrooptischer Bauteile.

6. Verwendung von flüssigkristallinen Mischungen gemäß Anspruch 1 oder 2, enthaltend als Komponente C mindestens einen chiralen Dotierstoff (Komponente C.12), zur Herstellung von Wärmeisolationsschichten, umfassend eine oder mehrere cholesterische Schichten, die im infraroten Wellenlängenbereich, vorzugsweise im Wellenlängenbereich von 750 nm bis 2000 nm, mindestens 40 %, insbesondere mindestens 45 % der auftreffenden Strahlung reflektieren.

7. Verwendung von flüssigkristallinen Mischungen gemäß Anspruch 1 oder 2, enthaltend als Komponente C mindestens einen chiralen Dotierstoff (Komponente C.12), zur Herstellung von Wärmeisolationsschichten, umfassend eine oder mehrere cholesterische Schichten, die im Wellenlängenbereich von 390 nm bis 750 nm eine Transmission von mindestens 80%, insbesondere mindestens 90 % der auftreffenden Strahlung aufweisen.

8. Wärmeisolationsschichten, umfassend eine oder mehrere cholesterische Schichten, die im infraroten Wellenlängenbereich, vorzugsweise im Wellenlängenbereich von 750 nm bis 2000 nm, mindestens 40%, insbesondere mindestens 45 % der auftreffenden Strahlung reflektieren, welche unter Verwendung von flüssigkristallinen Mischungen gemäß Anspruch 1 oder 2, enthaltend als Komponente C mindestens einen chiralen Dotierstoff (Komponente C.12), erhältlich sind.

9. Wärmeisolationsschichten, umfassend eine oder mehrere cholesterische Schichten, die im Wellenlängenbereich von 390 nm bis 750 nm eine Transmission von mindestens 80 %, insbesondere mindestens 90 % der auftreffenden Strahlung aufweisen, welche unter Verwendung von flüssigkristallinen Mischungen gemäß Anspruch 1 oder 2, enthaltend als Komponente C mindestens einen chiralen Dotierstoff (Komponente C.12), erhältlich sind.

## Claims

1. A liquid-crystalline mixture comprising
as component A:
one or more compounds of the general formula I 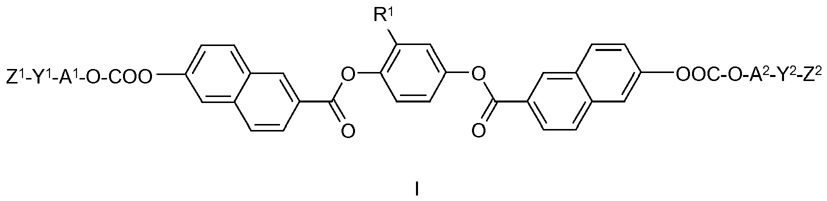 in which the variables are defined as follows:
Z¹, Z² are each independently 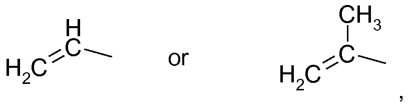
A¹, A² are each independently spacers having 4 to 8 carbon atoms,
Y¹, Y² are each independently a single chemical bond, oxygen, -CO-, -O-CO- or -CO-O-,
R¹ is hydrogen, C₁-C₆-alkyl or CO-O-C₁-C₆-alkyl,
as component B:
one or more compounds of the general formula II 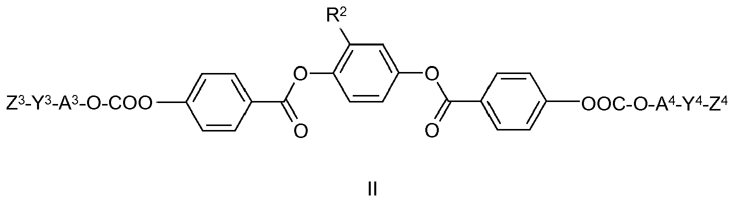 in which the variables are defined as follows:
Z³, Z⁴ are each independently 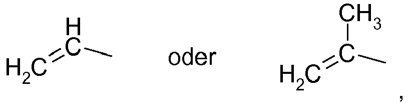
A³, A⁴ are each independently spacers having 4 to 8 carbon atoms,
Y³, Y⁴ are each independently a single chemical bond, oxygen, -CO-, -O-CO- or -CO-O-,
R² is hydrogen, C₁-C₆-alkyl or CO-O-C₁-C₆-alkyl,
where the proportion of component A is 22.5 mol% to 32.5 mol% and the proportion of component B is 67.5 mol% to 77.5 mol%, based on the total molar amount of A and B, and the proportions of components A and B add up to 100 mol%, and
as component C:
one or more substances selected from the group consisting of:
C.1 photoinitiators;
C.2 reactive diluents which comprise photopolymerizable groups;
C.3 diluents;
C.4 defoamers and deaerators;
C.5 lubricants and leveling agents;
C.6 thermally curing and/or radiatively curing auxiliaries;
C.7 substrate wetting aids;
C.8 wetting and dispersing aids;
C.9 hydrophobizing agents;
C.10 adhesion promoters;
C.11 auxiliaries for improving scratch resistance; and
C.12 chiral dopants, and
optionally as component D:
one or more substances selected from the group consisting of:
D.1 dyes; and
D.2 pigments.

2. The liquid-crystalline mixture according to claim 1, in which Z¹-Y¹ and Y²-Z² in formula I of component A and Z³-Y³ and Y⁴-Z⁴ in formula II of component B are reactive moieties

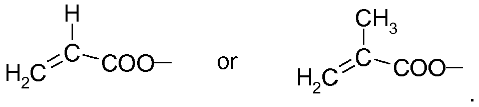

3. An oligomer or polymer obtainable by oligomerizing or polymerizing liquid-crystalline mixtures according to claim 1 or 2.

4. A process for printing or coating substrates, which comprises applying liquid-crystalline mixtures according to claim 1 or 2 to the substrates and then polymerizing them.

5. The use of liquid-crystalline mixtures according to claim 1 or 2 or of oligomers or polymers according to claim 3 for production of optical or electrooptical components.

6. The use of liquid-crystalline mixtures according to claim 1 or 2, comprising as component C at least one chiral dopant (component C.12), for production of thermal insulation layers, comprising one or more cholesteric layers which reflect at least 40%, especially at least 45%, of the incident radiation in the infrared wavelength range, preferably in the wavelength range from 750 nm to 2000 nm.

7. The use of liquid-crystalline mixtures according to claim 1 or 2, comprising as component C at least one chiral dopant (component C.12), for production of thermal insulation layers, comprising one or more cholesteric layers which have a transmission of at least 80%, especially at least 90%, of the incident radiation in the wavelength range from 390 nm to 750 nm.

8. A thermal insulation layer comprising one or more cholesteric layers which reflect at least 40%, especially at least 45%, of the incident radiation in the infrared wavelength range, preferably in the wavelength range from 750 nm to 2000 nm, which is obtainable using liquid-crystalline mixtures according to claim 1 or 2, comprising as component C at least one chiral dopant (component C.12).

9. A thermal insulation layer comprising one or more cholesteric layers which have a transmission of at least 80%, especially at least 90%, of the incident radiation in the wavelength range from 390 nm to 750 nm, which is obtainable using liquid-crystalline mixtures according to claim 1 or 2, comprising as component C at least one chiral dopant (component C.12).

## Revendications

1. Mélanges à cristaux liquides, contenant comme composant A :
un ou plusieurs composés de formule générale I 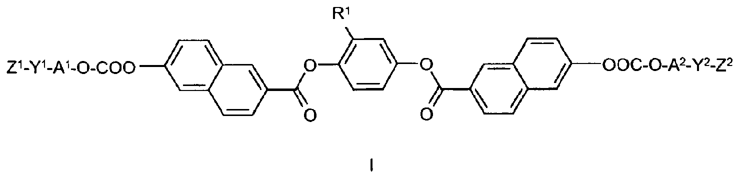
dans laquelle les variables ont la signification suivante :
Z¹, Z² représentent, indépendamment l'un de l'autre 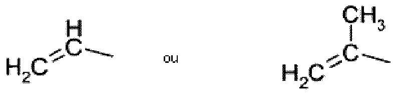
A¹, A² représentent, indépendamment l'un de l'autre, un écarteur comprenant 4 à 8 atomes de carbone,
Y¹, Y² représentent, indépendamment l'un de l'autre, une liaison chimique simple, oxygène, -CO-, -O-CO-ou -CO-O-,
R¹ représente hydrogène, C₁-C₆-alkyle ou CO-O-C₁-C₆-alkyle,
comme composant B :
un ou plusieurs composés de formule générale II 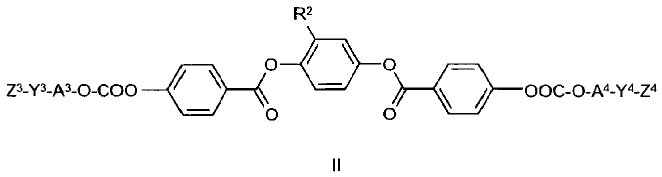 dans laquelle les variables ont la signification suivante :
Z³, Z⁴ représentent, indépendamment l'un de l'autre 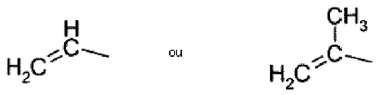
A³, A⁴ représentent, indépendamment l'un de l'autre, un écarteur comprenant 4 à 8 atomes de carbone,
Y³, Y⁴ représentent, indépendamment l'un de l'autre, une liaison chimique simple, oxygène, -CO-, -O-CO-ou -CO-O-,
R² représente hydrogène, C₁-C₆-alkyle ou CO-O-C₁-C₆-alkyle,
la proportion de composant A valant 22,5% en mole à 32,5% en mole et la proportion de composant B valant 67,5% en mole à 77,5% en mole, par rapport au nombre total de moles des composants A et B, et les proportions des composants A et B se complétant à 100% en mole, et
comme composant C :
une ou plusieurs substances choisies dans le groupe constitué par :
C.1 les photo-initiateurs ;
C.2 les diluants réactifs, qui contiennent des groupes photopolymérisables ;
C.3 les diluants réactifs ;
C.4 les antimousses et les agents de désaération ;
C.5 les lubrifiants et les agents d'étalement ;
C.6 les adjuvants thermodurcissables et/ou durcissant sous l'effet de rayons ;
C.7 les adjuvants mouillants pour le substrat ;
C.8 les adjuvants mouillants et dispersants,
C.9 les agents d'hydrofugation ;
C.10 les promoteurs d'adhérence ;
C.11 les adjuvants pour améliorer la résistance aux rayures ; et
C.12 les substances de dopage chirales, et
le cas échéant comme composant D :
une ou plusieurs substances choisies dans le groupe constitué par :
D.1 les colorants ; et
D.2 les pigments.

2. Mélanges à cristaux liquides selon la revendication 1, dans lesquels Z¹-Y¹ et Y²-Z² dans la formule I du composant A et Z³-Y³ et Y⁴-Z⁴ dans la formule II du composant B signifient les groupes réactifs

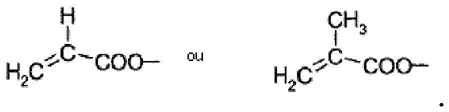

3. Oligomères ou polymères, pouvant être obtenus par oligomérisation ou polymérisation de mélanges à cristaux liquides selon la revendication 1 ou 2.

4. Procédé pour l'impression ou le revêtement de substrats, **caractérisé en ce qu'**on applique les mélanges à cristaux liquides selon la revendication 1 ou 2 sur les substrats et on les polymérise ensuite.

5. Utilisation de mélanges à cristaux liquides selon la revendication 1 ou 2 ou d'oligomères ou de polymères selon la revendication 3 pour la production d'éléments optiques ou électro-optiques.

6. Utilisation de mélanges à cristaux liquides selon la revendication 1 ou 2, contenant comme composant C au moins une substance de dopage chirale (composant C.12), pour la production de couches d'isolation thermique, comprenant une ou plusieurs couches cholestériques, qui réfléchissent, dans la plage de longueurs d'onde des infrarouges, de préférence dans la plage de longueurs d'onde de 750 nm à 2000 nm, au moins 40%, en particulier au moins 45% du rayonnement incident.

7. Utilisation de mélanges à cristaux liquides selon la revendication 1 ou 2, contenant comme composant C au moins une substance de dopage chirale (composant C.12), pour la production de couches d'isolation thermique, comprenant une ou plusieurs couches cholestériques, qui présentent, dans la plage de longueurs d'onde de 390 nm à 750 nm, une transmission d'au moins 80%, en particulier d'au moins 90% du rayonnement incident.

8. Couches d'isolation thermique, comprenant une ou plusieurs couches cholestériques, qui réfléchissent, dans la plage de longueurs d'onde des infrarouges, de préférence dans la plage de longueurs d'onde de 750 nm à 2000 nm, au moins 40%, en particulier au moins 45% du rayonnement incident, qui peuvent être obtenues en utilisant les mélanges à cristaux liquides selon la revendication 1 ou 2, contenant comme composant C au moins une substance de dopage chirale (composant C.12).

9. Couches d'isolation thermique, comprenant une ou plusieurs couches cholestériques, qui présentent, dans la plage de longueurs d'onde de 390 nm à 750 nm, une transmission d'au moins 80%, en particulier d'au moins 90% du rayonnement incident, qui peuvent être obtenues en utilisant les mélanges à cristaux liquides selon la revendication 1 ou 2, contenant comme composant C au moins une substance de dopage chirale (composant C.12).
